# EUROPÄISCHE PATENTSCHRIFT

(11) **EP 1 031 952 B1**
(45) Veröffentlichungstag und Bekanntmachung des Hinweises auf die Patenterteilung: **02.04.2003**
(21) Anmeldenummer: 00103608.6
(22) Anmeldetag: 21.02.2000
(51) Int. Cl.: G08B 15/00, G08B 13/196

(54) **Ueberwachungsanlage**
Monitoring system
Système de surveillance

(30) Priorität: 24.02.1999 DE 29903350 U
(43) Veröffentlichungstag der Anmeldung: 30.08.2000
(73) Patentinhaber: Nordmann, Kurt, Dr., CH-8002 Zürich (CH)
(72) Erfinder: Nordmann, Kurt, Dr., CH-8002 Zürich (CH)
(74) Vertreter: Blum, Rudolf Emil Ernst

(56) Entgegenhaltungen:
- US-A- 4 510 526
- US-A- 5 406 327

## Beschreibung

Die Erfindung betrifft eine Überwachungsanlage wie sie üblicherweise zum Überwachen von öffentlich zugänglichen Räumlichkeiten, wie etwa Ladenlokale und insbesondere grossräumigen Verkaufslokalen verwendet werden. Solche Anlagen sollen in der Regel zwei Aufgaben erfüllen, nämlich sowohl eine - meist optisch durchgeführte - Überwachung des Lokales und der darin ausgestellten Güter, wie auch die Ausübung einer gewissen Abschreckwirkung auf potentielle Diebe. Beides verlangt den Einsatz einer relativ hohen Anzahl von Überwachungseinheiten in denen sich die Kameras, Video-Aufnahmegeräte etc. befinden, pro Quadratmeter der zu überwachenden Fläche. Aus Kostengründen sowie der Bequemlichkeit der Überwachung halber, wird jedoch angestrebt auch in grossen Lokalen möglichst wenige Überwachungseinheiten einzusetzen. Um diese gut zu nutzen, werden manchmal ortsfeste Überwachungseinheiten verwendet, die entweder mehrere Kameras enthalten oder so ausgeführt sind, dass sie um eine vertikale sowie um eine horizontale Achse rotieren können. Aber auch dann bleibt das von einer einzigen Überwachungseinheit überwachte Gebiet recht beschränkt, was für grosse Flächen den Einsatz zahlreicher Überwachungseinheiten verlangt. Um die Anzahl der Überwachungseinheiten klein zu halten schlägt beispielsweise das US-Patent 5'406'327 vor, diese auf Schienen anzuordnen und mittels Zugkabel hin und her zu ziehen. Dabei sind die Kabel an einer schlecht zugänglichen Stelle etwa in der Mitte der zu befahrenden Strecke verankert und ihr Antrieb so übersetzt, dass die auf das Zugkabel auszuübende Kraft etwa das Doppelte der für die Fortbewegung der Überwachungseinheit nötigen Kraft beträgt, was leider nachteilig ist. Das US-Patent 4'510'526 sieht einen Reibungsantrieb der Überwachungseinheit vor, was eine dafür geeignete Rollbahn sowie Mittel, um die Antriebsräder mit genügender Kraft gegen diese Bahn zu pressen, verlangt. Dadurch entsteht ein verhältnismässig grosser konstruktiver Aufwand. Die vorliegende Erfindung sollte mit möglichst wenigen Überwachungsanlagen in einem gegebenen Raum eine effiziente Abschreckungs- und Überwachungsleistung erbringen und die Nachteile bekannter Anlagen vermeiden. Zu diesem Zweck ist sie wie in Anspruch 1 beschrieben, definiert.

Dadurch gelingt es, mit nur einer oder wenigen Überwachungseinheiten eine sehr grosse Fläche auch dann zu überwachen, wenn beispielsweise hohe Regale es verbieten, aus grösserem Abstand oder mit Hilfe von Weitwinkel- und/oder Zoom-Objektiven einen weiten Raum zu überblicken. Ausserdem gestattet die Erfindung, mit einer oder wenigen Überwachungseinheiten eine Abschreckungswirkung auszuüben, welche diejenige einer grösseren Anzahl von üblichen, ortsfesten Überwachungseinheiten sogar übertrifft. Denn allein schon die scheinbar zielgerichtete Bewegung einer Überwachungseinheit über dem Kopf eines potentiellen Diebes, oder längs eines von ihm beschrittenen Weges zwischen Warenauslagen, wirkt beunruhigender als die stille Anwesenheit von ortsfesten Überwachungseinheiten, deren Blickwinkel der potentielle Dieb einschätzen kann oder zu können glaubt.

Es soll nun die Erfindung anhand von Ausführungsbeispielen mit Hilfe der Zeichnung näher erläutert werden. Es zeigen:
Figur 1 ein Übersichtsschema einer Ausführungsform der Erfindung,
Figur 2a eine schematische Seitenansicht der Flaschenzugeinheit der Figur 1,
Figur 2b einen vereinfachten Schnitt längs der Linie II-II der Figur 1, und
Figur 3 das Schema einer Aufhängung für die in Figur 1 gezeigte Anlage.

Eine Überwachungsanlage der hier betrachteten Art umfasst in der Regel eine zentrale Steuereinheit und mindestens eine, meist über Kopfhöhe in dem zu überwachenden Raum angebrachte, Überwachungseinheit in der beispielsweise eine von der Steuereinheit gesteuerte Videokamera, Lautsprecher zur Durchgabe von Meldungen und fallweise Warnungen, sowie sonstige Hilfsmittel untergebracht sind. All diese Bestandteile sind dem Fachmann bekannt, es soll deshalb hier nur gezeigt werden, wie die Überwachungseinheit einer erfindungsgemässen Anlage in einem zu überwachenden Lokal angebracht, respektive bewegt werden kann.

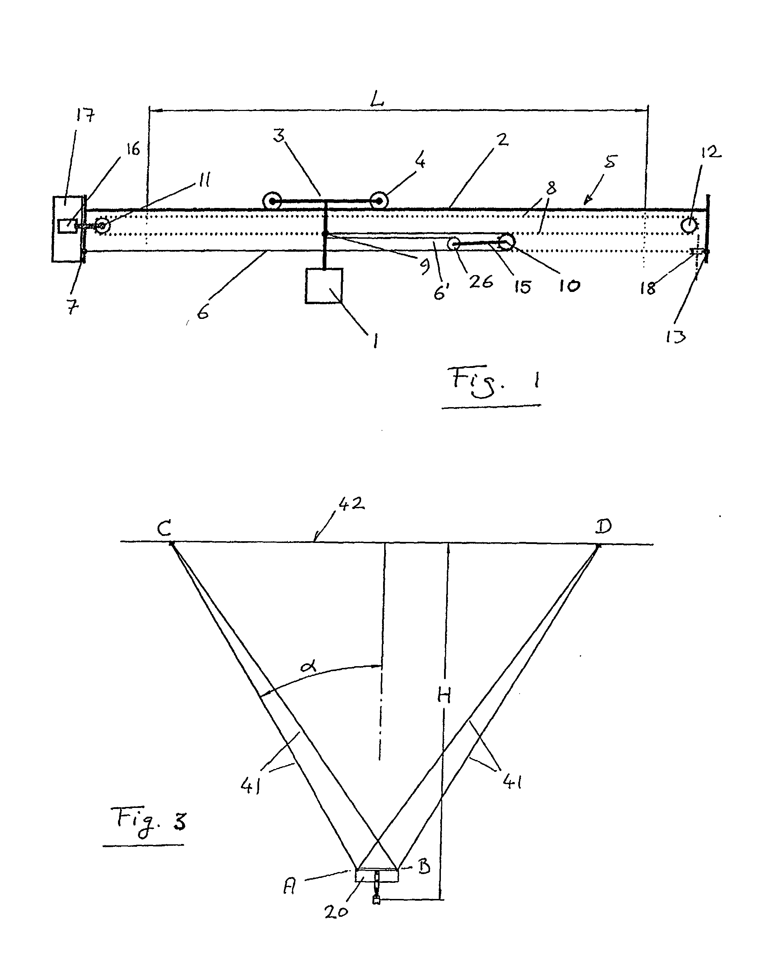

Die Figur 1 zeigt schematisch eine Ausführungsform der erfindungsgemässen Anlage. Die Bezugsziffer 1 bezeichnet das Gehäuse der Überwachungseinheit, im folgenden kurz Satellit genannt. Der Satellit 1 wird von einem der Länge nach geschlitzten oder mehrteiligen Hohlbalken 5 getragen, von dem die Figur 1 der Klarheit halber nur die (dick eingezeichnete) Deckfläche 2 zeigt. Auf dieser rollt ein mit Rollen 4 versehener Wagen 3 an dem der Satellit 1 aufgehängt ist.

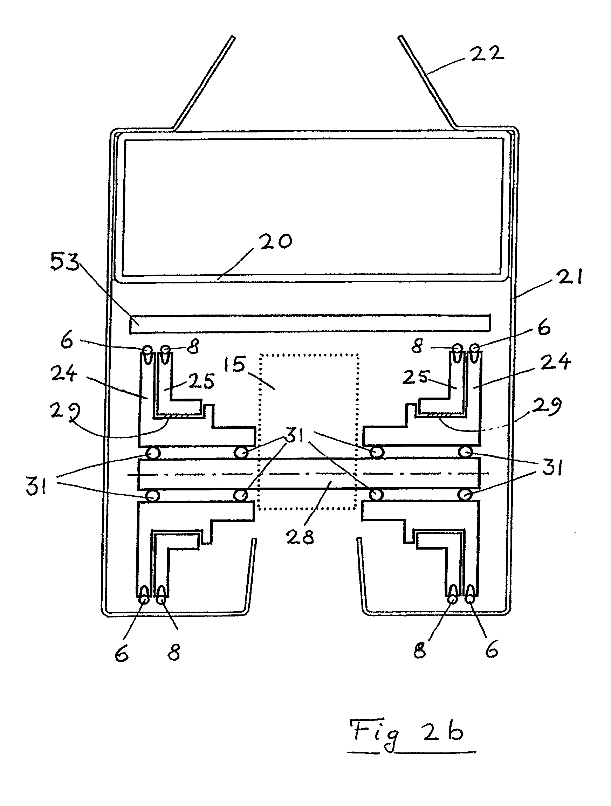

Der Wagen 3 wird mittels Zugseile bewegt, wobei für jede Funktion immer ein Paar von symmetrisch zur vertikalen Mittelachse des Balkens angeordneten Seilzügen vorgesehen ist, um das Verkanten des Wagens 3 oder einer weiter unten beschriebenen Flaschenzugeinheit (oder Bogie) 15 zu vermeiden. Diese Symmetrie ist aus der Figur 2b ersichtlich, während die Figur 1 und ihre Beschreibung der Einfachheit halber nur eines der beiden nebeneinanderlaufenden Zugseile zeigt, respektive beschreibt. Im Inneren des Hohlbalkens 5 ist ein an den entgegengesetzten Enden des Balkens befestigtes Zugseil 6, 8 untergebracht. Dieses kann zwar aus einem einzigen Stück bestehen, wird aber der Klarheit halber hier als aus zwei Abschnitten, einem passiven Abschnitt 6 und einem aktiven Abschnitt 8, bestehend beschrieben. Der passive Abschnitt 6 reicht von einem (in der Figur links befindlichen) ersten Ankerpunkt 7 zu einer Flaschenzugrolle 10, welche auf einen in Längsrichtung des Balkens frei beweglichen Bogie 15 angebracht ist, der in Fig. 1 nur durch einen dicken Strich angedeutet ist, und von dort zurück zu einem Befestigungspunkt 9 am Wagen 3. Der aktive Abschnitt 8 erstreckt sich von diesem Punkt über eine am linken Ende des Balkens befindliche erste Umlenkrolle 11 bis zu einer am entgegengesetzten Ende befindlichen, zweiten Umlenkrolle 12, dann von dort zu der Flaschenzugrolle 10, und wieder zurück bis zu einer (in der Figur rechts befindlichen) frei drehenden Ausgleichsrolle 18 mit vertikaler Achse. Von dort aus läuft ein zweiter Trumm des Zugseiles in symmetrischer Weise zurück, und zwar längs eines Weges der bezüglich der vertikalen Längsachse des Balkens spiegelsymmetrisch zum ersten, vom Ankerpunkt 7 bis zur Ausgleichsrolle 18 sich erstreckenden ersten Trumms. Ein von einer nur angedeuteten Schaltung 17 gesteuerter Motor 16 treibt die als Antriebsrolle wirkende erste Umlenkrolle 11 an. Wie aus der Figur 1 ersichtlich, kann dadurch der Wagen 3 und somit der Satellit 1 über eine Wegstrecke L bewegt werden, die nur um weniges kürzer ist als der Balken 5.

Die augenblickliche Lage des Wagens 3 längs des Balkens 5 wird durch eine auf dem Wagen montierte optische Einrichtung überwacht, die in bekannter Weise eine Reihe von am Balken angebrachten Markierungen abliest. Um die entsprechenden Signale, sowie andere vom Satellit stammende oder an dieses gerichtete Signale, zu übertragen, und um ihn mit dem nötigen Strom zu versorgen, sind elektrische Leitungen vorgesehen, die sich vom Wagen 3 bis in die Nähe des linken Ankerpunktes 7 erstrecken, und zwar im wesentlichen längs eines Weges der parallel zu demjenigen des passiven Teiles 6 des Zugseiles verläuft. Dementsprechend ist in Figur 1 nur ein Teil 6' dieser Leitungen sichtbar, der sich von einer am Bogie 15 angebrachten Umkehrrolle bis zum Wagen 3 erstreckt.

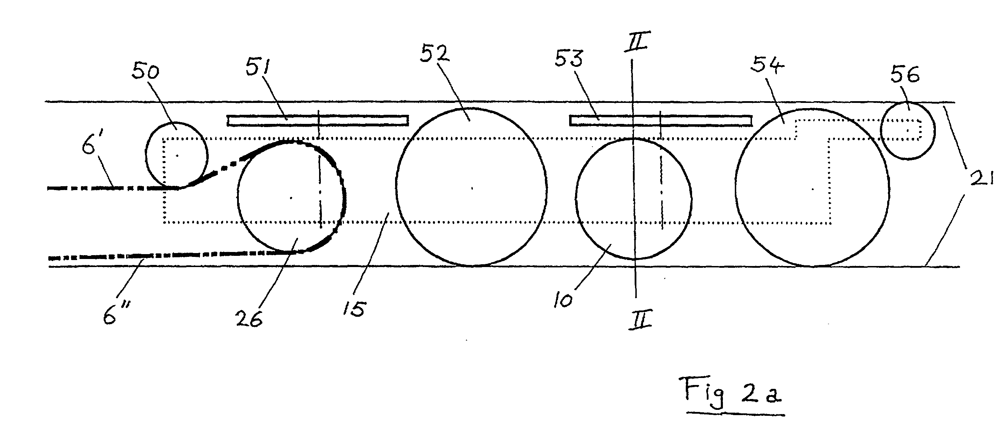

Diese Leitungen erlauben es unter anderem, eine im Satellit untergebrachte Kamera zu steuern, deren Videosignale an einen ortsfesten Beobachtungsposten zu übertragen, und fallweise den Satellit in bekannter, hier nicht weiter beschriebener Weise nach Wunsch zu rotieren und zu schwenken. Der Verlauf der Leitungen ist weiter unten mit Hilfe der Figur 2a näher beschrieben.

Figur 2a zeigt schematisch den Bogie 15, welcher unter anderem die Flaschenzugrolle 10 trägt. Der Bogie besteht im wesentlichen aus einem punktiert angedeuteten und mit 15 bezeichneten Körper, der eine Reihe von gegenüber dem Körper frei bewegliche Trag-, Umlenk- und Führungsrollen trägt. Der Körper rollt in einer tragenden Hülle 21 mit rechteckigem Querschnitt des Balkens 5, von dem in Figur 2a nur die Deck- und Bodenflächen eingezeichnet sind. Von links nach rechts weist der Bogie folgende Rollen und Rollenpaare auf, wobei die Paare stets aus zwei, bezüglich zu der vertikalen Längsachse des Balkens spiegelsymmetrischer Rollen oder Rädern bestehen. Ein Paar von Andruckrollen 50 für den zum Wagen führenden Leitungsstrang 6'. Ein Paar von Umlenktrommeln 26 für die elektrischen Leitungen 6', 6". Eine frei um eine vertikale Achse drehbare Führungsrolle 51, die den Bogie führt, indem sie auf der Innenfläche der einen oder anderen Seitenwand des hohlen Balkens rollt. Ein um eine horizontale Achse drehbares Paar 52 von Laufrädern, welches auf dem Boden des Balkens rollt; ein Paar 10 von Flaschenzugrollen; eine Führungsrolle 53, die gleich wie die Führungsrolle 51 angeordnet ist und zusammen mit dieser ein Verkanten des Bogie verhindert; ein zum Paar 52 analoges Paar von Laufrädern 54; und ein Paar von Stützrollen 56, welches ein Kippen des Bogie verhindert, indem er auf der Unterseite der Deckenfläche des Balkens rollt. Um den Roll-Lärm niedrig zu halten und eine gute Dämpfung zu erzielen, bestehen die Trag- und Führungsrollen 51 bis 54 vorzugsweise aus Polyurethan.

Die Figur 2b zeigt einen schematischen Schnitt längs II-II der Figur 2a. Der Balken besteht aus einem torsionsfesten Hohlprofil 20 mit rechteckigem Querschnitt und einer tragenden Hülle 21, beispielsweise aus gebogenem Blech. Der Balken kann in Längsrichtung aus mehreren Profilen zusammengesetzt sein und eine Gesamtlänge von über 20 m aufweisen. An mehreren Stellen ist eine am Profilteil 22 angreifende, hier nicht näher beschriebene Aufhängevorrichtung vorgesehen, um den Balken beispielsweise an der Decke einer zu überwachenden Halle aufzuhängen. Der Körper 15 des Bogies ist wiederum nur durch punktierte Linien angedeutet. Das symmetrisch zur vertikalen Mittelebene des Balkens angeordnete, in Figur 2a global mit 10 bezeichnete Paar von Flaschenzugrollen weist zwei aussenliegende Umlenkscheiben 24 für den passiven Abschnitt 6 des Zugseiles sowie zwei innenliegende Umlenkscheiben 25 für dessen aktiven Abschnitt 8 auf. Die äusseren Scheiben 24 laufen über Kugellager 31 auf einer am Körper 15 befestigten Achse 28. Die inneren Scheiben 25 sind, unter Zwischenschaltung eines Gleitlagers 29, auf ein einem achsialen Teil der äusseren Scheiben gelagert, und können sich mit einer gewissen Reibung frei gegenüber diesen drehen. Dies erlaubt Ungleichmässigkeiten im Bewegungsablauf der Zugseilabschnitte 6 und 8 aufzunehmen und zu dämpfen. Es enthält Fig. 2b noch einen Schnitt durch die Führungsrolle 53, deren vertikale Achse jedoch ausserhalb dieses Schnittes liegt (siehe Fig. 2a), um die Achse 28 der Umlenkscheiben nicht zu kreuzen.

Beide vom linken Ankerpunkt 7 (siehe Fig. 1) her kommende erste Trumms des passiven Abschnittes 6 des Zugseiles ruhen im wesentlichen auf den Bodenteil der Hülle 21, und werden dann in die Kehlen der Umlenkscheiben 24 aufgenommen und um 180° umgelenkt. Vom obersten Teil dieser Scheiben läuft dann das Zugseil zu seinem Befestigungspunkt 9 am Wagen 3. Von dort aus verläuft der aktive Abschnitt 8 beider Zugseile zur linken Umlenkrolle 11 (Fig. 1). Danach läuft der oberste Trumm des aktiven Abschnittes beider Zugseile innerhalb des Hohlprofiles 20 bis zur rechten Umlenkrolle 12. Dadurch wird der Durchhang dieses Trumms auch bei grosser Balkenlänge begrenzt, und es wird ausserdem vermieden, dass er mit anderen Trumms oder sonstigen Teilen in Konflikt kommt. Von der rechten Umlenkrolle 12 aus laufen die Zugseile dann zurück bis zu den Kehlen der Umlenkscheiben 25 des Bogie (Fig. 2b), am obersten Teil derselben. Nach einer Umlenkung von 180° verlassen die untersten Trumms des passiven Abschnittes die Scheibe in der Nähe des Bodenteiles der Hülle 21, und liegen auf diesem Bodenteil bis zur rechten Ausgleichsrolle 18. Von dort aus wird ein genau gleicher, zur vertikalen Symmetrie-Ebene des Balkens spiegelsymmetrischer, bis zum linken Ende der Bahn führender Weg zurückgelegt. Die elektrischen Leitungen zur Versorgung des Satellites können Rund- oder Spezialkabel sein, die im wesentlichen parallel zum aktiven Abschnitt der Zugseile laufen. Zwischen dem Ankerpunkt 7 und dem Paar 26 von Umlenktrommeln liegen diese Leitungen auf dem Bodenteil der Hülle 21; sie werden am Ende dieser Strecke in einer Nut der Umlenktrommeln um diese geführt und um 180° umgelenkt. Die Andruckrollen 50 sorgen für eine gute Führung der Leitungen auf den Umlenktrommeln.

Figur 3 zeigt eine für grosse Hallen geeignete Ausführung der Aufhängung der Bahn längs welcher die Überwachungseinheit bewegt werden kann. Die Figur ist eine Sicht in Längsrichtung der Bahn auf eine von mehreren durch Seile gebildeten Aufhängungen, die längs der Bahn angeordnet sind. In 20 ist das aus Figur 2b ersichtliche Hohlprofil angedeutet, welches die Bahn trägt. Ein durchgehendes Tragseil 41 läuft von einer oberen Ecke A des Hohlprofiles 20 zu einem Punkt D an der Decke 42 des Raumes, von dort zur anderen oberen Ecke B des Hohlprofiles, dann zurück zu A und weiter zu einem zweiten Punkt C an der Decke 42 des Raumes, und schliesslich von dort zu B. In den Punkten C und D sowie an seinen Durchgangsstellen in A und B wird das Tragseil durch (nicht gezeigte) Schraubklemmen kraftschlüssig festgehalten und kann dadurch einfach und präzise so justiert werden, dass die Bahn in gewünschter Weise hängt. Die lichte Höhe H unter der Decke kann bei dieser Ausführung bis zu 8 m betragen und der Winkel α wird vorzugsweise zwischen 30° und 45° gewählt.

## Patentansprüche

1. Überwachungsanlage mit längs einer Bahn verfahrbaren, Überwachungsmittel aufweisenden Überwachungseinheit (1), die durch einen auf einem starren Führungsweg (5) rollenden oder gleitenden Wagen (3) getragen wird, welcher durch mindestens ein Zugseil (6, 8) der Bahn entlang gezogen wird, **dadurch gekennzeichnet, dass** die Anlage mindestens ein aus zwei Abschnitten (6, 8) gebildetes Zugseil aufweist, dessen erste Extremität an einem ersten Ende (7) der Bahn verankert ist, dass das Zugseil von dort zu einer Rolle (26) einer längs der Bahn beweglichen Flaschenzugeinheit (15), dann zurück zu einer am ersten Ende der Bahn befindlichen ersten Umlenkrolle (11), von dieser zu einer am zweiten Ende der Bahn befindlichen zweiten Umlenkrolle (12), von dort zurück zu einer weiteren Rolle (10) der Flaschenzugeinheit (15) und schliesslich zum zweiten Ende (13) der Bahn verläuft, und dass der Wagen an der zwischen einer Umlenkrolle (11) und der Flaschenzugeinheit (15) befindlichen Grenzstelle (9) zwischen den Abschnitten des Zugseiles mit diesem verbunden ist.

2. Überwachungsanlage nach Anspruch 1, **dadurch gekennzeichnet, dass** beide Abschnitte (6, 8) aus einem einzigen Seilstück bestehen, an welchem der Wagen an der Grenzstelle (9) befestigt ist.

3. Überwachungsanlage nach Anspruch 1, **dadurch gekennzeichnet, dass** die Abschnitte (6, 8) durch zwei getrennte Seilstücke gebildet werden, die je an einem Ende am Wagen (3) befestigt sind.

4. Überwachungsanlage nach einem der Ansprüche 2 oder 4, **dadurch gekennzeichnet, dass** sie zwei zur vertikalen Symmetrieebene des Balkens (5, 20, 21) spiegelsymmetrisch verlaufende Zugseile (6, 8) aufweist (Fig. 2b), deren zweite Extremitäten am zweiten Ende (13) der Bahn verankert sind.

5. Überwachungsanlage nach einem der Ansprüche 2 oder 3, **dadurch gekennzeichnet, dass** sie ein Zugseil aufweist, dessen beide Extremitäten am ersten Ende (7) der Bahn verankert sind und das in seiner Mitte von einer am zweiten Ende (13) der Bahn befindlichen Ausgleichsrolle (18) umgelenkt wird, so dass die beiden Hälften des Zugseiles im wesentlichen symmetrisch zu der vertikalen Symmetrieebene des Balkens (5) verlaufen.

6. Überwachungsanlage nach einem der vorangehenden Ansprüche, **dadurch gekennzeichnet, dass** mindestens eine Umlenkrolle (11) jedes Zugseiles angetrieben ist, um das darüber laufende Zugseil anzutreiben.

7. Überwachungsanlage nach einem der vorangehenden Ansprüche, **dadurch gekennzeichnet, dass** die Rolle (24) der Flaschenzugeinheit, welche einen von der Verankerung am ersten Ende der Bahn ausgehenden Abschnitt führt und diejenige (25), welche den darauffolgenden Abschnitt führt, koaxial angeordnet und durch ein dazwischenliegendes Gleitlager (29) getrennt sind.

8. Überwachungsanlage nach einem der vorangehenden Ansprüche, **dadurch gekennzeichnet, dass** mindestens eine elektrische Leitung vom ersten Ende (7) der Bahn über eine Rolle (26) der Flaschenzugeinheit (15) bis zur Überwachungseinheit (1) geführt ist, um Strom und/oder Signale zu übertragen.

## Claims

1. Monitoring system with a monitoring unit (1) comprising monitoring means and moveable along a pathway, where the monitoring unit is carried by a carriage (3) which rolls or glides on a rigid guide (5) and is pulled along the pathway by at least one pulling cable (6, 8), **characterized in that** the system comprises at least one pulling cable consisting of two sections (6, 8) the first extremity of which is anchored at a first end (7) of the pathway from where the pulling cable extends to a sheave (26) of a tackle block (15) moveable along the pathway, then back to a first return pulley (11) located at the first end of the pathway, from there to a second return pulley (12) located at the second end of the pathway, then back to a further sheave (10) of the tackle block (15), and finally to the second end (13) of the pathway, and **in that** the carriage is attached to the pulling cable at a boundary (9) between the sections of the pulling cable, where this boundary is located between a return pulley (11) and the tackle block (15).

2. Monitoring system according to claim 1, **characterized in that** both sections (6, 8) are parts of a single cable to which the carriage is attached at the boundary (9).

3. Monitoring system according to claim 1, **characterized in that** the sections (6, 8) consist of two separate cables, each of which is attached at one end of the carriage (3).

4. Monitoring system according to claim 2 or 3, **characterized in that** it comprises two pulling cables (6, 8) arranged in a mirror symmetry (Fig. 2b) with respect to the vertical principal plane of the beam (5, 20, 21), the second extremities of said cables being anchored at the second end of the pathway.

5. Monitoring system according to claim 2 or 3, **characterized in that** it comprises a pulling cable both extremities of which are anchored at the first end (7) of the pathway, which cable is reversed in its middle by means of a compensating pulley (18) located at the second end (13) of the pathway, whereby the two halves of the pulling cable run in an essentially symmetrical way relative to the vertical principal plane of the beam (5).

6. Monitoring system according to any preceding claim, **characterized in that** at least one return pulley (11) of each cable is a driving pulley which drives the pulling cable which it carries.

7. Monitoring system according to any preceding claim, **characterized in that** the sheave (24) of the tackle block which guides a section that comes from the anchoring at the first end of the pathway, and the sheave (25) which guides the next section are coaxial and separated by a slide bearing (29) placed between them.

8. Monitoring system according to any preceding claim, **characterized in that** at least one electrical conductor extends from the first end (7) of the pathway, over a sheave (26) of the tackle block (15), and to the monitoring unit (1), in order to transmit current and/or signals.

## Revendications

1. Installation de surveillance avec une unité de surveillance (1) déplaçable le long d'une trajectoire, comportant des moyens de surveillance et portée par un chariot (3) roulant ou glissant sur une voie rigide (5) le long de laquelle il est tiré par au moins un câble de traction (6, 8), **caractérisée en ce que** l'installation comprend au moins un câble de traction composé de deux sections et dont la première extrémité est ancrée à un premier bout (7) de la trajectoire, le câble de traction allant de là à une poulie (26) d'un moufle (15) mobile le long de la trajectoire, retournant ensuite vers une première poulie de renvoi (11) disposée au premier bout de la trajectoire, allant ensuite vers une seconde poulie de renvoi (12) disposée au second bout de la trajectoire d'où il va vers une seconde poulie (10) du moufle (15) et retourne finalement jusqu'au second bout (13) de la trajectoire, et **en ce que** le chariot est fixé au câble de traction à la jonction (9) entre les deux sections de celui-ci, cette jonction étant située entre une poulie de renvoi (11) et le moufle (15).

2. Installation selon la revendication 1, **caractérisée en ce que** les deux sections (6, 8) sont constituées par un seul câble auquel le chariot est attaché à la jonction (9) entre lesdites sections.

3. Installation selon la revendication 1, **caractérisée en ce que** les deux sections (6, 8) sont constituées par deux câbles distincts, une extrémité de chacun étant fixée au chariot (3).

4. Installation selon une des revendications 2 ou 3, **caractérisée en ce qu'**elle comprend deux câbles de traction (6, 8) agencés de façon symétrique par rapport au plan de symétrie vertical de la poutre (5, 20, 21) (Fig. 2 b) et dont les secondes extrémités sont ancrées au second bout (13) de la trajectoire.

5. Installation selon une des revendications 2 ou 3, **caractérisée en ce qu'**elle comprend un câble dont les deux extrémités sont ancrées au premier bout (7) de la trajectoire, ce câble étant renvoyée en son milieu par une poulie de compensation (18) située au second bout (13) de la trajectoire, de façon à ce que les deux moitiés du câble de traction s'étendent de manière essentiellement symétrique par rapport au plan de symétrie vertical de la poutre (5).

6. Installation selon une des revendications précédentes, **caractérisée en ce qu'**au moins une poulie de renvoi (11) de chaque câble est motrice afin de mouvoir le câble qu'elle porte.

7. Installation selon une des revendications précédentes, **caractérisée en ce que** la poulie (24) du moufle qui porte une section de câble venant du point d'ancrage situé au premier bout de la trajectoire et celle (25) qui porte la section suivante sont coaxiales et séparées par un palier lisse (29).

8. Installation selon une des revendications précédentes, **caractérisée en ce qu'**au moins un conducteur électrique s'étend à partir du premier bout (7) de la trajectoire et passe sur une poulie (26) du moufle (15) pour aller ensuite jusqu'à l'unité de surveillance (1) afin de transmettre des signaux et/ou un courant d'alimentation.
